# EUROPÄISCHE PATENTSCHRIFT

(11) **EP 3 712 479 B1**
(45) Veröffentlichungstag und Bekanntmachung des Hinweises auf die Patenterteilung: **01.12.2021**
(21) Anmeldenummer: 19163371.8
(22) Anmeldetag: 18.03.2019
(51) Int. Cl.: F16L 5/10, F16L 5/14, H02G 3/22

(54) **MONTAGE EINER LEITUNG AN ODER IN EINER ÖFFNUNG**
ASSEMBLY OF A CONDUIT ON OR IN AN OPENING
MONTAGE D'UNE CONDUITE SUR OU DANS UNE OUVERTURE

(43) Veröffentlichungstag der Anmeldung: 23.09.2020
(73) Patentinhaber: Hauff-Technik GmbH & Co. KG, 89568 Hermaringen (DE)
(72) Erfinder: HECK, Martin, 89447 Zöschingen (DE); KURZ, Ralf, 89537 Giengen (DE)
(74) Vertreter: König Szynka Tilmann von Renesse Patentanwälte Partnerschaft mbB

(56) Entgegenhaltungen:
- EP-A1- 2 492 565
- EP-A1- 2 728 232
- WO-A1-95/09998
- DE-U1-202004 011 202
- US-A- 4 215 868
- US-A- 4 478 437
- US-A- 5 431 459
- US-A- 5 570 890
- US-A1- 2006 220 377
- US-A1- 2012 007 315

## Beschreibung

Die vorliegende Erfindung betrifft die Montage einer Leitung an oder in einer Öffnung.

Konventionell kann eine Leitung bspw. mit einer Pressdichtung montiert werden, also einem Elastomerkörper mit axial beidseits angeordneten Spannkörpern. Im montierten Zustand durchsetzt die Leitung den Elastomerkörper und ist dieser in der Öffnung angeordnet und verspannt. Dazu sind Spannbolzen vorgesehen, mittels welcher die Spannkörper axial zueinander verspannt sind, also der Elastomerkörper axial gestaucht und damit radial geweitet ist. In Folge der axialen Stauchung wird der Elastomerkörper radial dichtend an die Leitung und an eine die Öffnung begrenzende Laibung angedrückt.

Aus der US 2012/0007315 A1 ist eine Elastomermanschette bekannt, die mit einem Spannring gegen eine Öffnungslaibung in einem Mannloch angepresst wird und gegen eine eingeschobene Rohrleitung dichtet. Vergleichbare Gegenstände sind aus der US 5,570,890 A, der US 4,478,437 A, der US 2006/0220377 A1 und der US 4,215,868 A bekannt, die allesamt Elastomermanschetten zum Dichten gegen Rohrleitungen betreffen.

Ferner ist aus der WO 95/09998 A1 eine Elastomermanschette bekannt, mit der eine Leitung gegen eine Tankwand gedichtet wird, was eine flexible und insbesondere gewinkelte Leitungsführung erlaubt.

Der vorliegenden Erfindung liegt das technische Problem zugrunde, eine vorteilhafte Verwendung für die Montage einer Leitung an oder in einer Öffnung anzugeben.

Dies wird erfindungsgemäß mit der Verwendung gemäß Anspruch 1 gelöst, nämlich mittels einer Elastomermanschette. Diese wird in die Öffnung eingesetzt, sodass jedenfalls ein Abschnitt davon in der Öffnung angeordnet ist. Die Befestigung der Elastomermanschette erfolgt dann mit einem Spannring, der geweitet wird und die Elastomermanschette infolgedessen nach außen, gegen die Laibung drückt. Die Elastomermanschette wird ferner auch gegen die Leitung gedichtet, womit insgesamt eine Abdichtung zwischen der Öffnung bzw. Laibung und der Leitung geschaffen werden kann.

Im Vergleich zu einer eingangs genannten Pressdichtung kann sich bspw. ein Vorteil dahingehend ergeben, dass die Leitung in der Elastomermanschette flexibler als in einem verspannten Elastomerkörper gehalten ist. Die Leitung kann folglich z. B. auch unter einem Winkel an die Öffnung herangeführt werden, was Spielraum bei der Leitungsverlegung schaffen kann. Die flexible Anordnung kann bspw. auch einen Versatz ausgleichen helfen, etwa wenn es bei einer erdverlegten Leitung zu Setzungen im Erdreich kommt. Ferner kann das Verspannen einer Pressdichtung in der Regel auch das Anziehen einer größeren Zahl an Spannbolzen erfordern (um den Elastomerkörper gleichmäßig zu verformen); auch wenn der vorliegende Spannring bevorzugt über eine Spannschraube betätigt wird, kann die Zahl der zu betätigenden Schrauben im Vergleich zu einer Pressdichtung z. B. zumindest verringert seins.

Bevorzugte Ausgestaltungen sind Gegenstand der abhängigen Ansprüche sowie der gesamten Offenbarung. Diese richtet sich sowohl auf die Verwendung als auch auf eine Leitungsanordnung, die sich als Gegenstand einer solchen Verwendung ergibt. In der Darstellung der einzelnen Merkmale wird dabei nicht im Einzelnen zwischen Vorrichtungs- und Verfahrens- bzw. Verwendungsaspekten unterschieden; jedenfalls implizit ist die Offenbarung hinsichtlich sämtlicher Anspruchskategorien zu lesen.

Die Angaben "axial", "radial" und "umlaufend", sowie die zugehörigen Richtungen (Axialrichtung etc.), beziehen sich auf die Mittenachse der Öffnung, die Axialrichtung liegt parallel dazu und die Radialrichtungen stehen senkrecht darauf. Axial, also entlang der Mittenachse, erstreckt sich die Öffnung bspw. in ein Wand- oder Bodenelement hinein bzw. durch dieses hindurch. Die die Öffnung radial begrenzende Laibung kann um die Mittenachse bspw. dreh- oder im bevorzugten Fall eines kreisförmigen Querschnitts rotationssymmetrisch sein. Die Öffnung kann senkrecht zur Mittenachse im Allgemeinen auch einen nicht kreisförmigen Querschnitt haben (z. B. oval), wenngleich die Kreisform bevorzugt ist.

Die Elastomermanschette, im Folgenden der Einfachheit halber auch nur "Manschette", ist aus einem Elastomermaterial vorgesehen. Das "Elastomermaterial" ist ganz allgemein ein Kunststoff mit elastischem Verhalten. Dessen Shore-Härte (Shore A) kann bspw. bei höchstens 90 Shore, 80 Shore, 75 Shore bzw. 70 Shore und (davon unabhängig) bspw. bei mindestens 20 Shore, 25 Shore, 30 Shore, 35 Shore bzw. 40 Shore liegen. Es kann sich bspw. um ein Kautschukmaterial handeln, vorzugsweise um einen Synthesekautschuk, etwa EPDM (Ethylen-Propylen-Dien, M-Gruppe). Ebenso kann es sich aber bspw. auch um einen Thermoplastischen Elastomer (TPE) oder ein Silikon-basiertes Material handeln, etwa Silikonkautschuk bzw. Silikonelastomer.

Der Spannring kann sich bspw. umlaufend in einen Spannabschnitt und ein Spannband gliedern, siehe unten im Detail. Das Spannband bildet, bezogen auf einen Umlauf um die Mittenachse, einen Abschnitt bzw. ein Segment; es kann sich bspw. über einen Winkel von mindestens 30°, 50°, 70°, 90°, 100° bzw. 110° erstrecken. Es kann sich von dem Spannabschnitt des Spannrings abgesehen auch vollständig umlaufend erstrecken, sodass beide umlaufseitigen Enden des Spannbands am Spannabschnitt angeordnet sind. Mögliche Obergrenzen der Erstreckung des Spannbands können bspw. bei höchstens 350° bzw. 340° liegen, wobei im Falle einer Variante mit Segmenten und/oder weiteren Spannabschnitten auch kleinere Winkelbereiche möglich sind, bspw. von höchstens 170°, 150° bzw. 130°. Das Spannband ist allgemein aus einem steiferen Material als die Elastomermanschette vorgesehen, bspw. aus einem Hartkunststoff, insbesondere faserverstärkt, oder aus Metall.

Das Spannband kann bevorzugt die Form eines flachen Streifens haben, also entlang der Mittenachse ("axial") genommen eine größere Erstreckung als senkrecht zur Mittenachse ("radial") haben. Das Verhältnis von axialer zu radialer Erstreckung kann bspw. mindestens 2:1, 3:1, 4:1 bzw. 5:1 betragen, wobei mögliche Obergrenzen (davon unabhängig) bspw. bei höchstens 100:1, 80:1, 60:1, 40:1 bzw. 20:1 liegen können. Letztlich kann dies auch vom Material abhängen, sodass bspw. im Falle eines Spannbands aus Kunststoff, etwa aus Polyamid (z. B. glasfaserverstärkt), die Obergrenzen tiefer liegen können, etwa bei höchstens 10:1, 8:1, 6:1 bzw. 5:1, und auch niedrige Untergrenzen denkbar sind, etwa mindestens 1:2 bzw. 1:1 (angegeben ist jeweils das Verhältnis von axialer zu radialer Erstreckung). Zusammengefasst kann das Verhältnis von axialer zu radialer Erstreckung kann bspw. mindestens 1:2, 1:1, 2:1, 3:1, 4:1 bzw. 5:1 betragen, mit möglichen (davon unabhängigen) Obergrenzen bei bspw. höchstens 100:1, 80:1, 60:1, 40:1, 20:1, 10:1, 8:1, 6:1 bzw. 5:1.

Erfindungsgemäß wird die Leitung mittels eines Stützelements an oder in der Manschette montiert, das aus einem steiferen Material als die Manschette vorgesehen ist. Das Stützelement könnte auch aus Metall vorgesehen sein, bevorzugt ist ein Kunststoffmaterial. Es kann insbesondere ein Hartkunststoff, etwa mit einer Shore-Härte (D) von mindestens 70 Shore vorgesehen sein (mit möglichen Obergrenzen bei z. B. höchstens 95 bzw. 90 Shore). Es kommen bspw. PS, PC, ABS, PP und PA66 infrage, besonders bevorzugt kann auch POM sein, also Polyoxymethylen. POM hat relativ niedrige Reibwerte, was das Hindurchziehen der Leitung vereinfachen kann.

Die Leitung kann verglichen mit dem Durchmesser der Öffnung einen deutlich geringeren Außendurchmesser haben, der bspw. höchstens 3/4, 2/3, 1/2 oder 1/3 davon ausmachen kann (mit möglichen Untergrenzen bei z. B. mindestens 1/500 bzw. 1/200). Im Falle einer Öffnung mit nicht kreisförmigem Querschnitt ergibt sich der Durchmesser als Mittelwert aus kleinster und größter Erstreckung senkrecht zur Mittenachse, was im bevorzugten Fall der Kreisform dem Kreisdurchmesser entspricht. In der Öffnung ist die Leitung also vergleichsweise lose geführt, das Stützelement kann insoweit eine radiale Stabilisierung schaffen. Damit lässt sich bspw. einer zu großen Quer- bzw. Radialbelastung der Manschette vorbeugen, etwa im Falle eines Wandelements einer Belastung nach unten.

Im Allgemeinen kann es sich bei der Leitung auch um eine medienführende Leitung handeln, wie bspw. eine Gas-, Wasser- oder Fernwärmeleitung. Bevorzugt ist die Leitung ein Kabel oder ein Hohlrohr für ein Kabel, bspw. zum Führen eines Glasfaserkabels. Besonders bevorzugt ist die Leitung das Kabel selbst, wird also die Manschette gegen den Kabelmantel gedichtet, bspw. gegen den Kabelmantel gedrückt (siehe unten im Detail).

Generell sind "ein" und "eine" im Rahmen dieser Offenbarung als unbestimmte Artikel und damit immer auch als "mindestens ein" bzw. "mindestens eine" zu lesen. Es kann also bspw. auch eine Mehrzahl Leitungen an die Öffnung heran- oder durch die Öffnung hindurchgeführt werden, also mindestens 2 Leitungen, vorzugsweise mindestens 3 Leitungen, mit möglichen (davon unabhängigen) Obergrenzen bei z. B. höchstens 15, 10, 8 bzw. 6 Leitungen. Die Manschette kann entsprechend mit einer Mehrzahl Rohrstutzen (siehe unten im Detail) ausgestattet sein, und/oder es kann das Stützelement eine entsprechende Anzahl Leitungen aufnehmen.

In bevorzugter Ausgestaltung ist das Stützelement so ausgelegt, dass es die Leitung(en) in sämtlichen Radialrichtungen abstützen kann bzw. könnte (bspw. im Falle der Wand liegt die Leitung nur nach radial unten auf). Das Stützelement gibt der Leitung eine definierte Radialposition vor, bevorzugt mit einem gewissen radialen Spiel, siehe unten. Im Allgemeinen kann das Stützelement diese Radialposition bspw. auch mit mehreren, sich sternförmig zu der Leitung hin erstreckenden Stegen definieren, wobei die an der Leitung angeordneten Enden der Stege dort im Allgemeinen nicht miteinander verbunden sein müssen. In bevorzugter Ausgestaltung definiert das Stützelement eine Durchgangsöffnung, durch welche die Leitung hindurch verlegt wird. Diese Durchgangsöffnung, die das Stützelement bspw. über mindestens 230° begrenzt (weitere Werte siehe nächster Absatz) oder auch vollständig umlaufend begrenzt (jeweils bezogen auf eine Längsachse der Durchgangsöffnung), gibt dann der Leitung ihre Radialposition vor.

In bevorzugter Ausgestaltung definiert das Stützelement die Radialposition mit einem Spiel von mindestens 1 mm, in der Reihenfolge der Nennung zunehmend bevorzugt mindestens 2 mm, 3 mm, 4 mm bzw. 5 mm. Das "Spiel" soll dabei in sämtlichen Richtungen senkrecht zur Mittenachse bzw. sämtlichen Radialrichtungen bestehen, jeweils als Distanz, über welche die Leitung zwischen zwei einander zugewandten Lagerflächen in jeder der Richtungen hin und her bewegt werden kann. Im Allgemeinen kann auch die Laibung eine Lagerfläche darstellen und die Radialposition gemeinsam mit dem Stützelement definieren, bevorzugt bildet das Stützelement sämtliche die Radialposition definierenden Lagerflächen. Miteinander ergeben die Lagerflächen des Stützelements bevorzugt eine Mantelfläche, die bspw. über einen Winkelbereich von mindestens 230°, 250°, 270° bzw. 290° geschlossen sein kann; die Mantelfläche kann auch in sich geschlossen sein (360°), es können aber auch Obergrenzen bei z. B. höchstens 350° bzw. 340° liegen.

Mögliche Obergrenzen des Spiels, die im Allgemeinen auch unabhängig von einer Untergrenze von Interesse sein können und offenbart sein sollen, können bspw. bei höchstens 50 mm, 40 mm, 30 mm, 20 mm bzw. 15 mm liegen. Wie nachstehend im Einzelnen erläutert, kann die Manschette auch an unterschiedliche Leitungsdurchmesser anpassbar sein, sie kann insbesondere mit herausnehm- bzw. - lösbaren Schalen ausgestattet sein. Das vom Stützelement vorgegebene Spiel bezieht sich dann auf eine Leitung mit dem größten Durchmesser, für welchen die Manschette ausgelegt ist, also bspw. auf den Außendurchmesser der größten Schale, die zur Durchmesseranpassung herausnehmbar ist bzw. herausgenommen wird.

Gemäß einer bevorzugten Ausführungsform hat eine von dem Stützelement für die Auflage der Leitung gebildete Lagerfläche axial eine Erstreckung von mindestens 1 cm, bevorzugt mindestens 2 cm. Mögliche Obergrenzen der axialen Erstreckung, die im Allgemeinen auch von den Untergrenzen unabhängig von Interesse sein können und offenbart sein sollen, können bspw. bei höchstens 20 cm, 15 cm, 10 cm bzw. 8 cm liegen. Eine Begrenzung nach oben kann bspw. hinsichtlich der eingangs erwähnten Verkippbarkeit der Leitung von Vorteil sein (je länger die Lagerfläche, desto stärker ist die Verkippung beschränkt). Eine gewisse Mindesterstreckung kann andererseits bspw. die Belastung, also den Druck auf die Leitung selbst (z. B. aufgrund ihres Eigengewichts) begrenzen helfen, also z. B. einer Beschädigung der Leitung vorbeugen.

Das Stützelement ist in bevorzugter Ausgestaltung innerhalb der Manschette angeordnet, es wird also nach radial außen von der Manschette eingefasst. Im Allgemeinen wäre hingegen bspw. auch ein zwar innerhalb der Öffnung, dabei aber außerhalb der Manschette, also axial auf diese folgend angeordnetes Stützelement denkbar. Im Vergleich dazu kann die Anordnung innerhalb der Manschette einen kompakteren Aufbau ermöglichen, zudem kann die Integration auch die Handhabung vereinfachen.

Im Allgemeinen könnten die Manschette und das Stützelement auch einstückig miteinander ausgebildet sein, also nicht zerstörungsfrei voneinander trennbar. Die beiden könnten bspw. als 2K-Spritzgussteil hergestellt werden, das Stützelement z. B. aus ABS und die Manschette aus TPE gespritzt werden. Bevorzugt sind die beiden jedoch mehrstückig zueinander, also als zuvor separat hergestellte Teile zusammengesetzt. Das zu der Manschette mehrstückige Stützelement ist dann bevorzugt in diese eingesetzt.

In bevorzugter Ausgestaltung ist das in die Manschette eingesetzte Stützelement axial formschlüssig in der Manschette gehalten. Dieser Formschluss besteht jedenfalls in einer Axialrichtung, die aus Sicht des Stützelements von einer Dichtung zwischen Stützelement und Leitung weg weist (nachstehend auch "erste Axialrichtung"). Die Manschette bildet einen Hinterschnitt, der das Stützelement in Position hält. In einem Axialschnitt betrachtet kann die Manschette bspw. einen nach radial innen hervortretenden Vorsprung bilden, hinter welchem das Stützelement gehalten ist. Dieser Vorsprung kann umlaufend durchgehend ausgebildet sein, also als in sich geschlossener Wulst, es ist aber auch eine segmentierte, umlaufend unterbrochene Ausführung möglich. Generell kann der axiale Zusammenhalt bspw. dahingehend von Vorteil sein, dass sich das Stützelement außerhalb der Öffnung vergleichsweise leicht in die Manschette einsetzen lässt, weil diese radial etwas geweitet werden kann (dies kann bei der Montage vor Ort oder vorzugsweise in der Fertigung erfolgen). Nach dem Einsetzen in die Öffnung begrenzt dann deren Laibung die radiale Dehnbarkeit der Manschette, sodass das Stützelement zuverlässig axial gehalten ist.

Gemäß einer bevorzugten Ausführungsform sind das Stützelement und der Spannring axial auf derselben Höhe angeordnet. Sie sollen also axial jedenfalls einen Überlapp haben, bevorzugt ist das axial kompaktere Teil der beiden innerhalb der Axialerstreckung des anderen angeordnet (oder sind die beiden bei gleicher Axialerstreckung deckungsgleich). Insgesamt kann sich damit ein kompakter Aufbau realisieren lassen, sodass sich die Anordnung, bspw. auch in vergleichsweise kurzen Öffnungen montieren lässt, bspw. in relativ dünnen Wänden bzw. Rahmen.

Der mit dem Stützelement axial auf derselben Höhe angeordnete Spannring sitzt radial außerhalb des Stützelements. In bevorzugter Ausgestaltung ist er radial außenseitig am bzw. vom Stützelement axial in Position gehalten. Dies betrifft bevorzugt beide Axialrichtungen, der Spannring ist dann also bspw. in einem Axialschnitt bzw. in Axialschnitten betrachtet zwischen radial hervortretenden Vorsprüngen gehalten. Er kann bspw. in einer umlaufenden Nut angeordnet sein. Bevorzugt bildet das Stützelement selbst die Vorsprünge, sind diese also monolithisch aus demselben Material wie das übrige Stützelement geformt (ohne Materialgrenze dazwischen).

Gemäß einer bevorzugten Ausführungsform bildet die Manschette eine umlaufende Tasche, also eine sich axial (in einer ersten Axialrichtung) in die Manschette hinein erstreckende Ausnehmung. Diese wird nach radial innen und außen von der Manschette begrenzt. In der Ausnehmung wird bzw. ist der Spannring angeordnet, dieser wird also gewissermaßen von der Manschette ummantelt. Dies kann bspw. einer Beschädigung der Leitung beim Hindurchführen bzw. -ziehen vorbeugen helfen, es könnte anderenfalls bspw. ein Kabel bzw. Kabelmantel leicht an einem Spannring aus Metall beschädigt werden. Generell ist der Spannring ein vergleichsweise steifes Teil und lassen sich mit der Anordnung in der Tasche bspw. Kanten etc. des Spannrings abdecken.

Der in der Tasche bzw. Ausnehmung angeordnete Spannring könnte im Allgemeinen auch noch ein Stück weit hervorstehen; bevorzugt ist er bezogen auf seine axiale Erstreckung zu mindestens 70 %, 80 % bzw. 90 % axial innerhalb der Ausnehmung platziert. Besonders bevorzugt sitzt er vollständig in der Ausnehmung, von einem etwaigen Spannmittel zum Betätigen des Spannrings abgesehen, bspw. dem Schraubenkopf einer Spannschraube.

Die Manschette begrenzt die Ausnehmung nach radial innen und außen, was im Bild der Tasche deren Seitenwänden entspricht; ferner begrenzt die Manschette die Ausnehmung auch axial, was dem Boden der Tasche entspricht. Die Manschette begrenzt die Ausnehmung in einer ersten Axialrichtung, in der sich die Ausnehmung in die Manschette hinein erstreckt; in der entgegengesetzten zweiten Axialrichtung ist die Tasche bevorzugt offen. Die Tasche wird also nach dem Einsetzen des Spannrings dann nicht verschlossen, was im Allgemeinen denkbar wäre (zum Beispiel durch Kleben oder Vulkanisieren).

In bevorzugter Ausgestaltung ist die Tasche in der ersten Axialrichtung vollständig umlaufend geschlossen, also in jedem Axialschnitt betrachtet. Die Tasche ist also in anderen Worten axial dicht, also fluidundurchlässig. Mit der Manschette, die zum einen gegen die Laibung gedrückt wird und zum anderen gegen die Leitung gedichtet ist, kann somit die Öffnung insgesamt dicht verschlossen werden. Der in der geschlossenen Tasche angeordnete Spannring wird von jener Seite aus betätigt, die in der zweiten Axialrichtung liegt. Von dieser Seite aus kann also bspw. ein Monteur einen Spannhebel oder vorzugsweise eine Spannschraube betätigen, um den Spannring zu weiten und damit die Manschette gegen die Laibung zu drücken.

Generell kann die Öffnung bspw. auch in einer Gehäusewand vorgesehen sein oder von einem Rahmen gebildet werden, z. B. einem an eine technische Einrichtung bzw. eine Schiffs- oder Schottwand gesetzten Rahmen. Bevorzugt handelt es sich um eine Öffnung in einem Wand- oder Bodenelement eines Gebäudes, besonders bevorzugt in einer Gebäudewand. Dabei kann das Wand- oder Bodenelement selbst die Laibung bilden, etwa im Falle einer Kernbohrung. Andererseits kann aber bspw. auch ein Futterrohr bzw. allgemein ein in dem Wand- oder Bodenelement montiertes Rohrelement die Öffnung bilden.

Gemäß einer bevorzugten Ausführungsform bildet ein Rohrelement die Öffnung, also eine Innenwandfläche des Rohrelements die Laibung, wobei an der Innenwandfläche eine Kontur vorgesehen ist. Bei dem Rohrelement kann es sich bspw. um einen Teil einer Durchführung handeln, die z. B. in eine Betonwand eingegossen wird bzw. eingegossen ist (im Zuge der Herstellung der Wand). Axial endseitig an dem Rohrelement kann ein Flansch bzw. eine Flanschplatte vorgesehen sein, um die Durchführung vor dem Eingießen an einer Schalung zu befestigen. Um hierbei einem Eindringen von Beton in das Rohrelement vorzubeugen, kann axial endseitig ein Verschluss in dem Rohrelement vorgesehen sein, vorzugsweise ein reversibel herausnehm- und einsetzbarer Verschlussdeckel. Dieser kann bevorzugt über einen Schraub- und/oder Bajonettmechanismus in dem Rohrelement befestigt sein, wozu dessen Innenwandfläche vorzugsweise mit einer entsprechenden Kontur vorgesehen ist.

In bevorzugter Ausgestaltung ist an der Außenwandfläche der Manschette ebenfalls eine Kontur vorgesehen, welche die Kontur des Rohrelements berücksichtigt, vorzugsweise komplementär dazu ist. Eine "Kontur" ist in diesem Zusammenhang in einem Axialschnitt betrachtet ein Verlauf mit radialem Anteil, also einem radialen Vorsprung und/oder einer radialen Vertiefung. Es können bspw. an der Innenwandfläche des Rohrelements angeordnete Gewindeabschnitte die Kontur bilden. Die Kontur des Rohrelements dient, wie gesagt, auch der Befestigung eines Verschlussdeckels während des Vergießens des Rohrelements. Danach kann dieser Deckel durch Drehen gelöst und axial herausgenommen werden. Die mit einer entsprechenden Kontur versehene Manschette lässt sich somit bspw. axial einschieben und dann durch eine Drehbewegung in ihrer Axialposition fixieren. Sie hat bevorzugt zu den Gewindeabschnitten des Rohrelements komplementäre Vertiefungen.

Mit der Drehbewegung gelangen die Konturen der Manschette und des Rohrelements in Eingriff miteinander, sie bilden einen Hinterschnitt bezüglich der Axialrichtung. Damit ist die Elastomermanschette einerseits bereits vor dem Andrücken mit dem Spannring axial in Position gehalten, also gegen ein Herausfallen bzw. - rutschen gesichert. Zudem wird der Manschette so auch eine definierte Axialposition vorgegeben, was bspw. Montagefehlern vorbeugen kann. Diese Axialpositionierung kann auch bereits vor dem Andrücken der Manschette dadurch unterstützt sein, dass der Spannring auf derselben Axialposition wie die Kontur angeordnet ist. Der Spannring stützt die Manschette somit bereits vor dem Weiten bzw. Andrücken radial ab, stabilisiert also den mit der Innenwandfläche des Rohrelements gebildeten Hinterschnitt.

Generell kann die Manschette auf den von dem Spannring angedrückten Bereich axial folgend bspw. auch eine trichterförmig zulaufende Hülse bzw. Tülle bilden, die sich gegen Leitungen unterschiedlicher Durchmesser andrücken lässt. Bevorzugt weist die Manschette einen axial hervortretenden Stutzen zum Andrücken auf die Leitung auf, in dem weiter bevorzugt zur Durchmesseranpassung herausnehmbare Schalen angeordnet sind. Diese könnten im Allgemeinen auch monolithisch mit der übrigen Manschette ausgebildet sein, also aus demselben durchgehenden Elastomermaterial geformt (ohne Materialgrenze dazwischen). Die Schalen können über Materialbrücken zusammenhängen, die bevorzugt axial endseitig angeordnet sind. Besonders bevorzugt hängen zwar die Schalen untereinander über Materialbrücken zusammen, ist diese Schalenfolge jedoch zu dem Rohrstutzen der Manschette mehrstückig, also in diesen eingesetzt. Dies kann bspw. die Herstellbarkeit der Manschette vereinfachen bzw. eine Flexibilität hinsichtlich der erwarteten Leitungsdurchmesser schaffen.

Generell erfolgt die Abdichtung der Manschette gegen die Leitung durch Andrücken auf die Leitung, bevorzugt ist dafür auf einem Dichtabschnitt der Manschette, bspw. dem erwähnten Trichter oder dem bevorzugten Rohrstutzen, ein Spannmittel angeordnet. Dieses Spannmittel ist ein Ring, dessen Durchmesser sich verringern lässt, bspw. über einen Hebel- bzw. Exzentermechanismus, bevorzugt über einen Schraubmechanismus; besonders bevorzugt ist als Spannmittel eine Spannschelle vorgesehen. Im Falle des Rohrstutzens mit Schalen wird durch Betätigen des Spannmittels der Rohrstutzen nach innen, in Richtung der Leitung gedrückt, wobei in Abhängigkeit vom Durchmesser der Leitung der Rohrstutzen entweder direkt gegen die Leitung gedrückt werden kann oder eine oder mehrere Schalen dazwischen angeordnet sein können ("andrücken auf" meint also "andrücken in Richtung zu der Leitung hin").

Gemäß einer bevorzugten Ausführungsform ist der Spannring mit einem Spannabschnitt vorgesehen, der ein Keilelement, ein Führungsteil und eine Spannschraube aufweist. Das Keilelement ist an dem Führungsteil geführt und kann in dieser Führung durch Anziehen der Spannschraube entlang einer Bewegungsstrecke bewegt werden. Diese Bewegungsstrecke liegt anteilig in einer Weitenrichtung, in welcher die Weite des Spannabschnitts genommen wird. Folglich ändert sich die Weite des Spannabschnitts und damit der Umfang des Spannrings, wenn das Keilelement durch Anziehen der Spannschraube entlang der Bewegungsstrecke bewegt wird. Das Keilelement und das Führungsteil sind dabei bezogen auf die Weitenrichtung bevorzugt formschlüssig zusammengehalten, greifen nämlich mit einem Hinterschnitt ineinander.

Bevorzugt sind das Keilelement und das Führungsteil nicht nur beim Weiten des Spannabschnitts aneinander geführt, sondern aufgrund des Hinterschnitts auch bei einem Verengen. Das Keilelement ist bevorzugt doppelkeilförmig ausgeführt. Dieser Doppelkeil ist dann an der einen Umfangsseite an dem (ersten) Führungsteil geführt und an der entgegengesetzten Umfangsseite an einem zweiten Führungsteil entlang einer zweiten Bewegungsstrecke geführt. Bevorzugt schließen die beiden Bewegungsstrecken mit der Axialrichtung gleich große Winkel ein. Bevorzugt weist der Spannabschnitt dem ersten Keilelement axial entgegengesetzt ein weiteres Keilelement auf, das an einem weiteren Führungsteil geführt ist, ebenfalls entlang einer Bewegungsstrecke mit einem Anteil in der Weitenrichtung. Besonders bevorzugt sind die beiden axial entgegengesetzt angeordneten Keilelemente jeweils doppelkeilförmig. Sie sind über die Spannschraube wirkverbunden, können also durch Drehen der Spannschraube aufeinander zu bzw. voneinander weg bewegt werden, womit das Weiten des Spannrings und damit Andrücken der Elastomermanschette an die Laibung erreicht werden.

Die Erfindung betrifft auch eine Leitungsanordnung gemäß Anspruch 15. Dabei kann insbesondere auch ein Wand- oder Bodenelement, in dem die Öffnung angeordnet ist, Teil dieser Leitungsanordnung sein. Es wird auf die vorstehende Offenbarung bezüglich des Wand- oder Bodenelements verwiesen. Auch bezüglich der Manschette, des Spannrings und/oder der Leitung bzw. der Relativanordnung und Montage dieser Teile wird auf die vorstehende Offenbarung verwiesen. Sofern dort davon die Rede ist, dass in bestimmter Weise montiert "wird", ist diesbezüglich der Leitungsanordnung dahingehend zu lesen, dass in entsprechender Weise montiert "ist".

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Elastomermanschette mit Stützelement und Spannring in einer geschnittenen Schrägansicht;
- Figur 2: einen Ausschnitt eines Rohrelements einer Durchführung, die eine Öffnung bildet, in welche die Anordnung gemäß Figur 1 eingesetzt wird;
- Figur 3: die Elastomermanschette und den Spannring gemäß Figur 1 in einer Schrägansicht von vorne;
- Figur 4: einen Ausschnitt der Elastomermanschette ohne den Spannring, ebenfalls in einer Schrägansicht von vorne;
- Figur 5: die Elastomermanschette ohne Stützelement, Spannring und Einsätze in einer geschnittenen Schrägansicht;
- Figur 6: einen Einsatz zum Einsetzen in einen Rohrstutzen der Elastomermanschette und Dichten gegen die Leitung;
- Figur 7: das Stützelement für sich in einer Schrägansicht;
- Figur 8: eine Detailansicht eines Schnitts durch das Stützelement mit einer schematisch dargestellten Leitung;
- Figur 9: den Spannring der Anordnung gemäß Figur 1 in einer Einzeldarstellung;
- Figur 10: eine Detailansicht des Spannrings gemäß Figur 9;
- Figur 11: eine weitere Variante einer Elastomermanschette mit Stützelement und Spannring in einer geschnittenen, schematischen Seitenansicht.

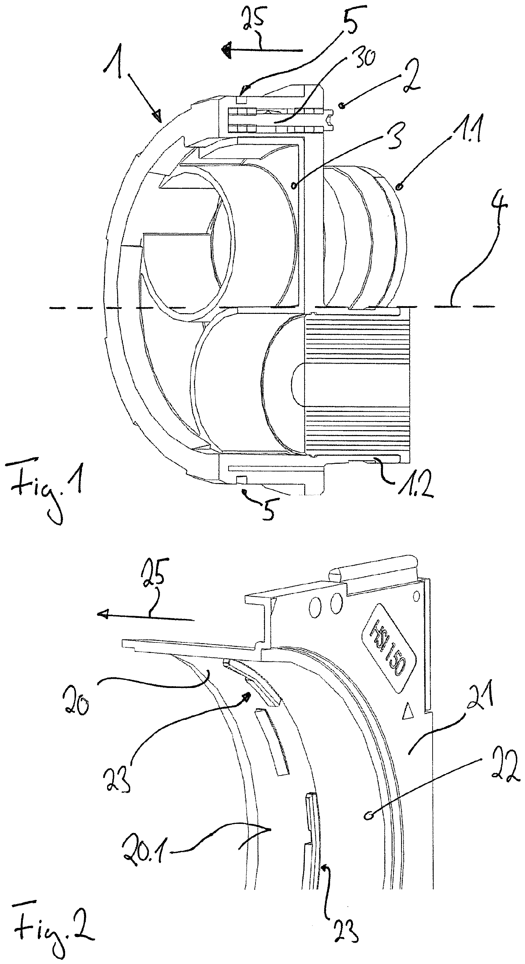

**Figur 1** zeigt eine Elastomermanschette 1, einen Spannring 2 und ein Stützelement 3 in einer geschnittenen Schrägansicht. Es handelt sich um einen Axialschnitt, die Schnittebene beinhaltet also eine Mittenachse 4 der Öffnung (siehe unten). Zur besseren Illustration wird im Folgenden auch auf Figur 2 verwiesen.

**Figur 2** zeigt, ebenfalls in einer geschnittenen Schrägansicht, einen Ausschnitt eines Rohrelements 20, an dessen axialem Ende eine Flanschplatte 21 angeordnet ist. Die Flanschplatte 21 kann an einer (nicht dargestellten) Schalung befestigt werden, die dann zur Herstellung eines Wandelements mit Beton aufgefüllt wird. Das Rohrelement 20 wird von dem Beton umschlossen und hält dabei eine Öffnung 22 frei. Während des Vergießens bzw. Einbetonierens ist in dem Rohrelement 20 ein (nicht dargestellter) Verschlussdeckel angeordnet, dieser ist über eine an der Innenwandfläche 20.1 des Rohrelements 20 ausgebildete Kontur 23 in dem Rohrelement 20 gehalten. Konkret handelt es sich bei der Kontur 23 um Stege, die Gewindeabschnitte darstellen, die eine kombinierte Dreh-/Bajonettarretierung des Verschlussdeckels schaffen (jeder Steg hat einen Gewindeabschnitt mit Steigung, auf den eine axial zurückspringende Ausnehmung folgt).

Die Elastomermanschette 1 gemäß Figur 1 wird in die Öffnung 22 eingesetzt, und zwar in einer ersten Axialrichtung 25. Es ist dann jener Teil mit dem Stützelement 3 axial innerhalb der Öffnung 22 angeordnet, die in Figur 1 nach schräg hinten weisenden Rohrstutzen 1.1, 1.2 stehen axial aus der Öffnung 22 hervor. Sie dienen zur Dichtung gegen die Leitung bzw. Leitungen, siehe unten im Detail.

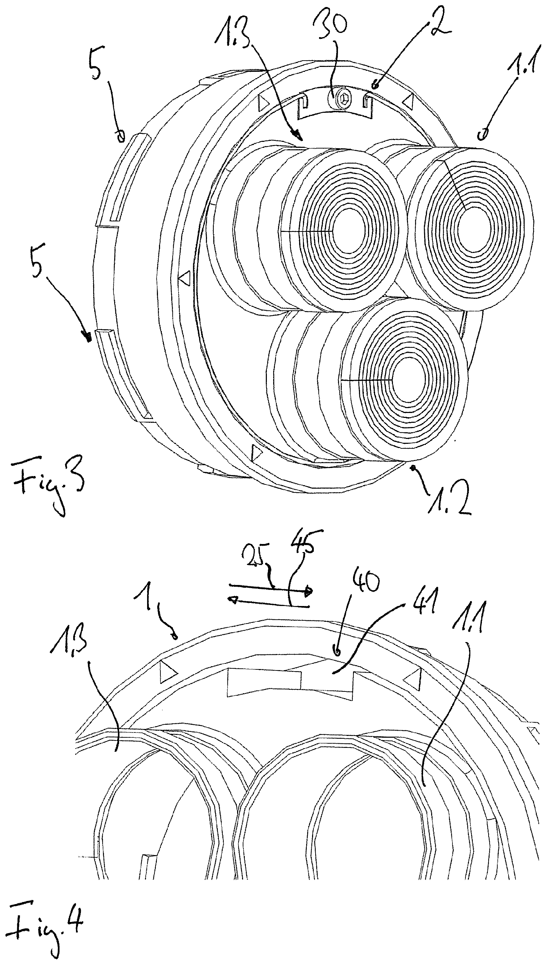

Die Elastomermanschette 1 ist außenseitig mit einer Kontur 5 vorgesehen, vgl. auch die Darstellung gemäß **Figur 3****.** Die Kontur 5 ist zu der Kontur 23 komplementär, die Elastomermanschette kann also axial in die Öffnung 22 eingeschoben und dann durch eine Drehbewegung arretiert werden. Damit ist die Elastomermanschette axial in Position gehalten und gegen ein unbeabsichtigtes Herausrutschen gesichert.

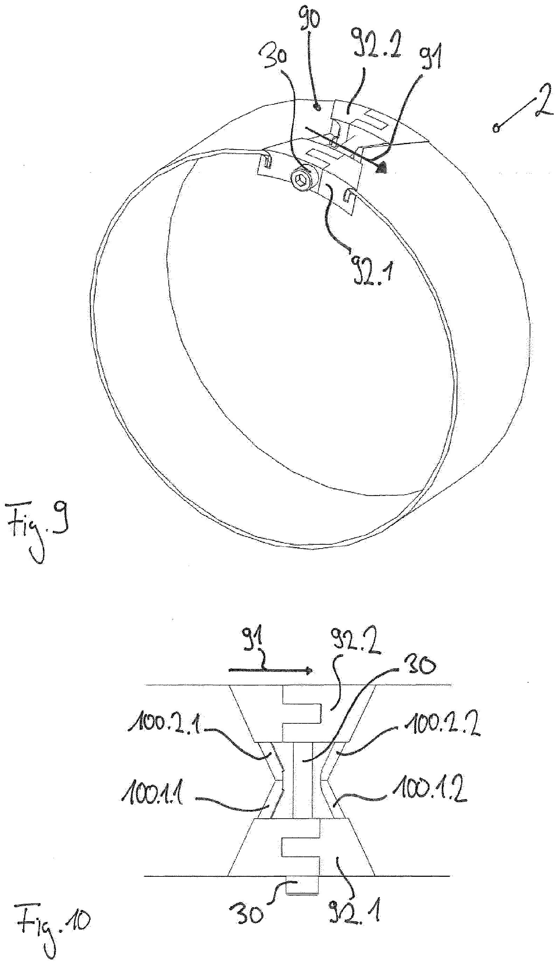

Zur weiteren Befestigung und insbesondere Abdichtung gegen das Rohrelement 20 ist der Spannring 20 vorgesehen, vgl. auch Figur 3. Durch Betätigen der Spannschraube 30 lässt sich der Spannring 2 weiten (vgl. Figuren 9 und 10 im Detail). Damit wird die Elastomermanschette 1 nach radial außen angedrückt, also dichtend gegen eine die Öffnung 22 begrenzende Laibung bzw. vorliegend die Innenwandfläche 20.1 gedrückt.

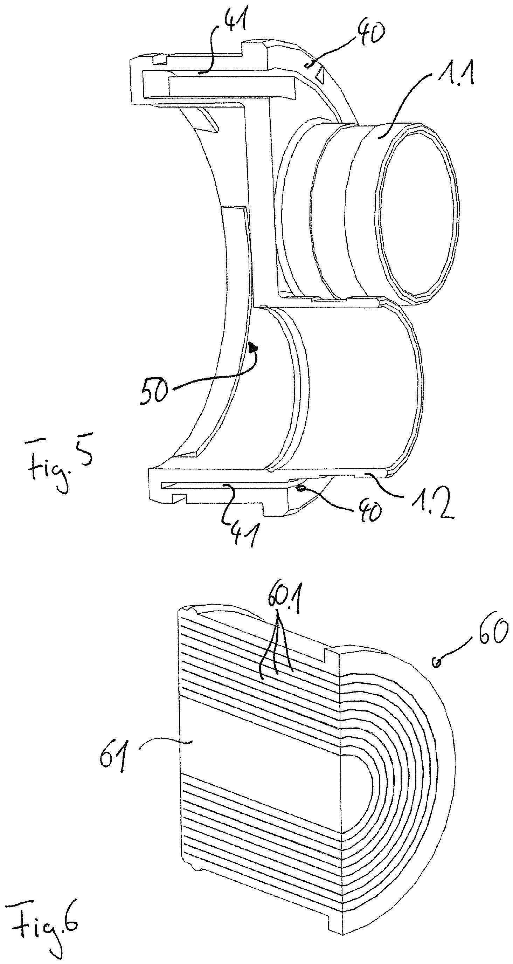

**Figur 4** zeigt die Elastomermanschette 1 in Einzeldarstellung, also ohne den Spannring 2 und auch ohne die anhand von Figur 6 im Detail diskutierten Einsätze. Dies lässt eine von der Elastomermanschette 1 gebildete Tasche 40 erkennen, also eine Ausnehmung 41, die sich in der ersten Axialrichtung 25 in die Elastomermanschette 1 hineinerstreckt. In der entgegengesetzten, zweiten Axialrichtung 45 ist die Tasche offen. Im montierten bzw. zusammengesetzten Zustand ist in der Tasche 40 der Spannring 2 angeordnet, was bspw. einer Leitungsbeschädigung vorbeugen kann (vgl. die Beschreibungseinleitung im Einzelnen).

**Figur 5** illustriert nochmals die Elastomermanschette 1 für sich, in einer geschnittenen, schrägen Seitenansicht. In diesem Schnitt ist die Tasche 40 bzw. Ausnehmung 41 zu erkennen, in welcher der Spannring 2 platziert wird. An der Elastomermanschette 1 ist ein Hinterschnitt 50 ausgebildet, der das Stützelement 3 axial in Position hält. Ferner sind die monolithisch mit der übrigen Elastomermanschette 1 geformten Rohrstutzen 1.1,1.2 zu erkennen, in die dann jeweils ein Einsatz 60 gemäß **Figur 6** eingesetzt wird. Der Einsatz 60 ist in Figur 6 geschnitten dargestellt, er weist einen mittigen Blindstopfen 61 und Schalen 60.1 zur Durchmesseranpassung auf. Die Schalen 60.1 sind über axial endseitig angeordnete Materialbrücken miteinander verbunden (in Figur 6 hinten).

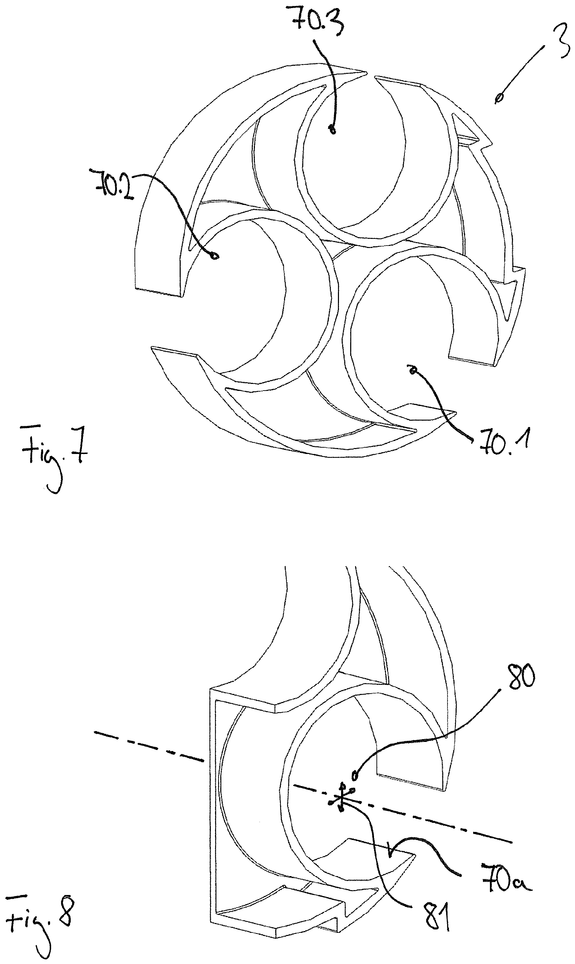

**Figur 7** zeigt das Stützelement 3 in einer Einzeldarstellung, ergänzend wird auch auf die Detailansicht gemäß **Figur 8** verwiesen. Das Stützelement 3 ist, der Anzahl Rohrstutzen 1.1-1.3 entsprechend, mit drei Durchgangsöffnungen 70.1-70.3 vorgesehen. Jede davon gibt der jeweiligen Leitung eine jeweilige Radialposition 80 vor, vgl. Figur 8. Auf der Radialposition 80 ist die Leitung mit einem radialen Spiel 81 von wenigen Millimetern gelagert, was einerseits Stabilität schafft, andererseits aber auch noch ein gutes Hindurchführen der Leitung erlaubt bzw. eine gewisse Verkippung ermöglicht. Die von dem Stützelement 3 für die Leitung gebildete Lagerfläche 70a ist deshalb auch axial begrenzt, mit einer Länge von nur wenigen Zentimetern ausgeführt.

**Figur 9** zeigt den Spannring 2 in einer Einzeldarstellung. Der Spannring 2 weist einen Spannabschnitt 90 auf, dessen in einer Weitenrichtung 91 genommene Weite ist durch Anziehen der Spannschraube 30 veränderbar. Dazu weist der Spannabschnitt 90 zwei Keilelemente 92.1, 92.2 auf, die jeweils doppelkeilförmig ausgeführt sind, vgl. auch die Detailansicht gemäß **Figur 10****.** Die Keilelemente 92.1,92.2 sind jeweils entlang eines Führungsteils 100.1.1, 100.1.2, 100.2.1, 100.2.2 des Spannrings 2 bewegbar geführt. Konkret werden die Keilelemente 92.1, 92.2 durch Anziehen der Spannschraube 30 axial aufeinander zubewegt, wodurch die Führungsteile 100.1.1 und 100.1.2, sowie die Führungsteile 100.2.1 und 100.2.2 in der Weitenrichtung 91 auseinandergedrückt werden, der Spannring 2 also geweitet wird. Damit lässt sich die Elastomermanschette 1, wie vorstehend geschildert, an die Laibung der Öffnung andrücken.

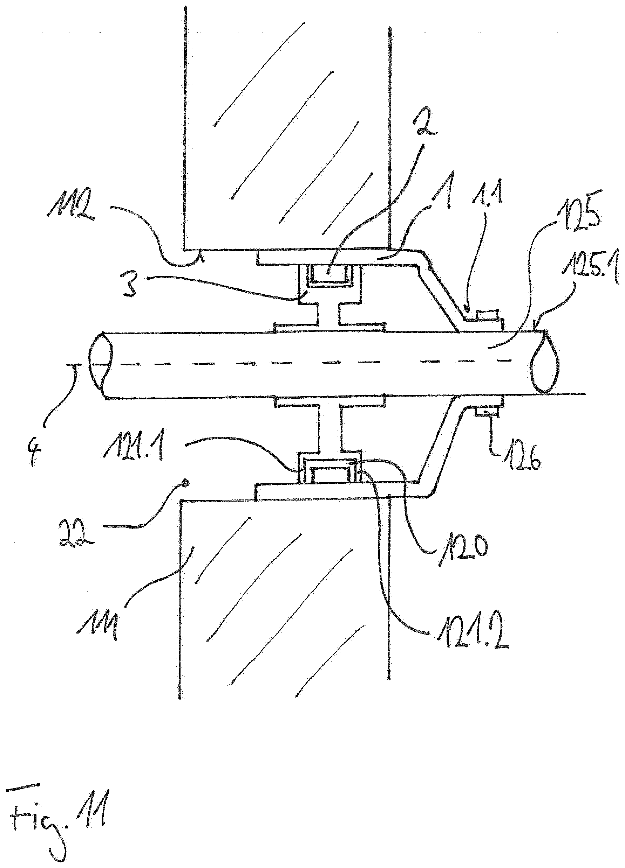

**Figur 11** zeigt eine weitere Variante einer Elastomermanschette 1 mit einem Stützelement 3 und einem Spannring 2. Auch diese Elastomermanschette 1 wird in eine Öffnung 22 in einer Wand 111 eingesetzt und durch Weiten des Spannrings 2 an die die Öffnung 22 begrenzende Laibung 112 angedrückt.

Im Unterschied zu der Ausführungsform gemäß Figur 1 ff. ist der Spannring 2 in diesem Fall nicht in einer von der Elastomermanschette 1 gebildeten Tasche angeordnet, sondern radial außenseitig an dem Stützelement 3 in einer vom Stützelement 3 gebildeten, umlaufenden Ausnehmung 120. Der Spannring 2 ist zwischen vom Stützelement 3 gebildeten Vorsprüngen 121.1, 121.2 axial in Position gehalten. Die Vorsprünge 121.1, 121.2 sind radial derart bemessen, dass sie einerseits bereits den unverspannten (nicht geweiteten) Spannring 2 axial halten, andererseits dann aber der verspannte Spannring 2 radial etwas übersteht (anders als in der schematischen Darstellung). Bevorzugt besteht dann gleichwohl noch ein axialer Formschluss, hält also der gegen die Elastomermanschette 1 bzw. die Laibung 112 verspannte Spannring 2 dann das Stützelement 3 axial in Position.

In der in Figur 11 gezeigten Situation ist eine Leitung 125 durch die Öffnung 22 verlegt. Die Leitung 125 wird von dem Stützelement 3 radial abgestützt, vgl. die vorstehenden Anmerkungen. Ferner ist die Elastomermanschette 1 gegen die Leitung 125 gedichtet, wird sie nämlich auf eine Außenwandfläche 125.1 der Leitung 125 angedrückt, mit einem hier schematisch gezeigten Spannmittel 126, nämlich einer Spannschelle.

## Patentansprüche

1. Verwendung einer Elastomermanschette (1) zur Montage einer Leitung (125) an oder in einer Öffnung (22),
wobei die Elastomermanschette (1)
i) in die Öffnung (22) gesetzt wird,
ii) durch Weiten eines in der Elastomermanschette (1) angeordneten Spannrings (2), bezogen auf eine Mittenachse (4) der Öffnung (22), nach radial außen gegen eine die Öffnung (22) begrenzende Laibung (112) angedrückt wird, und
iii) gegen die an die Öffnung (22) heran- oder durch die Öffnung (22) hindurchgeführte Leitung (125) gedichtet wird,
**dadurch gekennzeichnet, dass** die Leitung (125) mittels eines Stützelements (3) an oder in der Öffnung (22) montiert wird, welches aus einem im Vergleich zu der Elastomermanschette (1) steiferen Material vorgesehen ist, wobei die montierte Leitung (125) an dem Stützelement (3) radial abgestützt aufliegt.

2. Verwendung nach Anspruch 1, bei welcher das Stützelement (3) dazu ausgelegt ist, die Leitung (125) in allen Radialrichtungen abzustützen.

3. Verwendung nach Anspruch 2, bei welcher das Stützelement (3) der Leitung (125) mit einem Spiel (81) von mindestens 1 mm und höchstens 50 mm eine Radialposition (80) vorgibt.

4. Verwendung nach einem der Ansprüche 1 bis 3, bei welcher eine von dem Stützelement (3) für die radial abgestützte Auflage der Leitung (125) gebildete Lagerfläche (70a) eine axiale Erstreckung von mindestens 1 cm und höchstens 20 cm hat.

5. Verwendung nach einem der Ansprüche 1 bis 4, bei welcher das Stützelement (3) innerhalb der Elastomermanschette (1) angeordnet ist, also nach radial außen von der Elastomermanschette (1) eingefasst wird.

6. Verwendung nach Anspruch 5, bei welcher das Stützelement (3) in die Elastomermanschette (1) eingesetzt ist und ein Hinterschnitt (50) das Stützelement (3) in zumindest einer Axialrichtung (25, 45) in Position hält.

7. Verwendung nach Anspruch 5 oder 6, bei welcher das Stützelement (3) und der Spannring (2) axial auf derselben Höhe angeordnet sind, und zwar der Spannring (2) radial außerhalb des Stützelements (3) angeordnet ist.

8. Verwendung nach Anspruch 7, bei welcher ein Hinterschnitt den Spannring (2) radial außenseitig an dem Stützelement (3) in zumindest einer Axialrichtung (25,45) in Position hält.

9. Verwendung nach einem der vorstehenden Ansprüche, bei welcher die Elastomermanschette (1) eine umlaufende Tasche (40) bildet, nämlich mit einer sich in einer ersten Axialrichtung (25) in die Elastomermanschette (1) hineinerstreckenden Ausnehmung (41) vorgesehen ist, in welcher der Spannring (2) angeordnet ist.

10. Verwendung nach Anspruch 9, bei welcher die Tasche (40) in der ersten Axialrichtung (25) vollständig umlaufend geschlossen ist und der Spannring (2) zum Weiten und damit Andrücken der Elastomermanschette (1) von einer Seite aus betätigt wird, die in einer entgegengesetzten zweiten Axialrichtung (45) liegt.

11. Verwendung nach einem der vorstehenden Ansprüche, bei welcher ein Rohrelement (20) die Öffnung (22) bildet, die Laibung (112) also eine Innenwandfläche (20.1) des Rohrelements (20) ist, wobei an der Innenwandfläche (20.1) eine Kontur (23) vorgesehen ist, die mit einer Kontur (23) an einer Außenwandfläche der in die Öffnung (22) eingesetzten Elastomermanschette (1) einen Hinterschnitt (50) bildet.

12. Verwendung nach einem der vorstehenden Ansprüche, bei welcher die Elastomermanschette (1) zur Abdichtung gegen die Leitung (125) einen axial hervortretenden Stutzen (1.1-1.3) aufweist, in dem vorzugsweise herausnehmbare Schalen (60.1) zur Anpassung an unterschiedliche Leitungsdurchmesser angeordnet sind, wobei die Elastomermanschette (1) durch Andrücken des Stutzens in Richtung der Leitung (125), und zwar mit einem auf dem Stutzen (1.1-1.3) angeordneten Spannmittel (126), gegen die Leitung (125) gedichtet ist.

13. Verwendung nach einem der vorstehenden Ansprüche, bei welcher der Spannring (2) einen Spannabschnitt (90) aufweist, welcher Spannabschnitt (90) ein Keilelement (92.1, 92.2), ein Führungsteil (100.1.1, 100.1.2, 100.2.1, 100.2.2) und eine Spannschraube (30) aufweist, wobei für das Weiten gemäß Ziffer ii) die Spannschraube (30) angezogen und damit eine Weite des Spannabschnitts (90) verändert wird, wozu das Keilelement (92.1, 92.2) an dem Führungsteil (100.1.1, 100.1.2, 100.2.1, 100.2.2) geführt ist und durch das Anziehen der Spannschraube (30) in dieser Führung entlang einer Bewegungsstrecke an dem Führungsteil (100.1.1, 100.1.2, 100.2.1, 100.2.2) bewegt wird, welche Bewegungsstrecke einen Anteil in einer die Weite des Spannabschnitts (90) bestimmenden Weitenrichtung (91) hat.

14. Leitungsanordnung mit einer Leitung (125), einer Öffnung (22), einer Elastomermanschette (1) und einem Spannring (2), wobei die Leitung (125) mit der Elastomermanschette (1) und dem Spannring (2) an oder in der Öffnung (22) montiert ist, insbesondere als Ergebnis einer Verwendung nach einem der vorstehenden Ansprüche,
wobei die Elastomermanschette (1) in die Öffnung (22) gesetzt ist,
der Spannring (2) die Elastomermanschette (1), bezogen auf eine Mittenachse (4) der Öffnung (22), nach radial außen gegen eine die Öffnung (22) begrenzende Laibung (112) drückt,
und die Elastomermanschette (1) gegen die an die Öffnung (22) heran- oder durch die Öffnung (22) hindurchgeführte Leitung (125) gedichtet ist, **dadurch gekennzeichnet, dass** die Leitung (125) mittels eines Stützelements (3) an oder in der Öffnung (22) montiert ist, welches aus einem im Vergleich zu der Elastomermanschette (1) steiferen Material vorgesehen ist, wobei die montierte Leitung (125) an dem Stützelement (3) radial abgestützt aufliegt.

## Claims

1. Use of an elastomer sleeve (1) for mounting a line (125) against or in an opening (22),
wherein the elastomer sleeve (1) is
i) inserted into the opening (22),
ii) pressed radially outwards against a reveal (112) delimiting the opening (22), relative to a centre axis (4) of the opening (22), by expanding a clamping ring (2) arranged in the elastomer sleeve (1), and
iii) sealed against the line (125) routed against the opening (22) or through the opening (22),
**characterised in that** the line (125) is mounted against or in the opening (22) by means of a supporting element (3) which is provided in a material that is more rigid in comparison to the elastomer sleeve (1), wherein the mounted line (125) rests on the supporting element (3) such that it is radially supported.

2. Use in accordance with claim 1, wherein the supporting element (3) is designed to support the line (125) in all radial directions.

3. Use in accordance with 2, wherein the supporting element (3), with a play (81) of at least 1 mm and no more than 50 mm, defines a radial position (80) for the line (125).

4. Use in accordance with one of claims 1 to 3, wherein a resting surface (70a), created by the supporting element (3) to provide a surface on which the line (125) can rest so that it is radially supported, has an axial extent of at least 1 cm and no more than 20 cm.

5. Use in accordance with one of claims 1 to 4, wherein the supporting element (3) is arranged within the elastomer sleeve (1) and is therefore enclosed by the elastomer sleeve (1) in radially outwardly directions.

6. Use in accordance with claim 5, wherein the supporting element (3) is inserted into the elastomer sleeve (1) and an undercut (50) holds the supporting element (3) in position in at least one axial direction (25, 45).

7. Use in accordance with claim 5 or 6, wherein the supporting element (3) and the clamping ring (2) are arranged axially at the same position, and the clamping ring (2) is arranged radially outside of the supporting element (3).

8. Use in accordance with claim 7, wherein an undercut holds the clamping ring (2) in position in at least one axial direction (25, 45) radially on the outside of the supporting element (3).

9. Use in accordance with one of the preceding claims, wherein the elastomer sleeve (1) forms an all-round pocket (40), namely a pocket provided with a recess (41) extending into the elastomer sleeve (1) in a first axial direction (25), in which recess the clamping ring (2) is arranged.

10. Use in accordance with claim 9, wherein the pocket (40) is closed all the way around in the first axial direction (25) and the clamping ring (2) for expanding and thus pressing on the elastomer sleeve (1) is actuated from one side which lies in a second opposite axial direction (45).

11. Use in accordance with one of the preceding claims, wherein a tubular element (20) forms the opening (22), the reveal (112) is therefore an internal wall surface (20.1) of the tubular element (20), wherein a contour (23) is provided on the internal wall surface (20.1), which contour forms an undercut (50) together with a contour (23) on an outer wall surface of the elastomer sleeve (1) inserted into the opening (22).

12. Use in accordance with one of the preceding claims, wherein the elastomer sleeve (1) has an axially protruding connection piece (1.1-1.3) to seal against the line (125), in which connection piece preferably extractable shells (60.1) for adjustment to different line diameters are arranged, wherein the elastomer sleeve (1) is sealed against the line (125) by pressing the connection piece towards the line (125), namely using a clamping means (126) arranged on the connection piece (1.1-1.3).

13. Use in accordance with one of the preceding claims, wherein the clamping ring (2) has a clamping section (90), which clamping section (90) has a wedge element (92.1, 92.2), a guide part (100.1.1, 100.1.2, 100.2.1, 100.2.2) and a clamping screw (30), wherein to expand the clamping ring in step ii) the clamping screw (30) is tightened, thereby altering an extent width of the clamping section (90), for what purpose the wedge element (92.1, 92.2) is guided along the guide part (100.1.1, 100.1.2, 100.2.1, 100.2.2) and is moved in this guide along a movement section on the guide part (100.1.1, 100.1.2, 100.2.1, 100.2.2) by tightening the clamping screw (30), which movement section forms a portion oriented in an expansion direction (91) defining the extent of the clamping section (90).

14. A line arrangement comprising a line (125), an opening (22), an elastomer sleeve (1) and a clamping ring (2), wherein the line (125) is mounted against or in the opening (22) using the elastomer sleeve (1) and clamping ring (2), in particular as a result of a use in accordance with one of the preceding claims,
wherein the elastomer sleeve (1) is inserted into the opening (22);
the clamping ring (2) presses the elastomer sleeve (1) radially outwards against a reveal (112) delimiting the opening (22), relative to a centre axis (4) of the opening (22); and
the elastomer sleeve (1) is sealed against the line (125) routed against the opening (22) or through the opening (22),
**characterised in that** the line (125) is mounted against or in the opening (22) by means of a supporting element (3) which is provided in a material that is more rigid in comparison to the elastomer sleeve (1), wherein the mounted line (125) rests on the supporting element (3) such that it is radially supported.

## Revendications

1. Utilisation d'une manchette en élastomère (1) pour le montage d'une conduite (125) menant à une ouverture (22) ou traversant celle-ci,
ladite manchette en élastomère (1) étant
i) enchâssée dans l'ouverture (22),
ii) pressée radialement vers l'extérieur contre un intrados (112) délimitant ladite ouverture (22), eu égard à un axe médian (4) de l'ouverture (22), sous l'effet de l'élargissement d'un collier de serrage (2) disposé dans la manchette en élastomère (1), et
iii) disposée de façon étanche contre la conduite (125) qui mène à l'ouverture (22) ou traverse ladite ouverture (22),
**caractérisée en ce que** la conduite (125) est montée, de manière à mener à l'ouverture (22) ou à la traverser, au moyen d'un élément de support (3) réalisé dans un matériau plus rigide que celui de la manchette en élastomère (1), ladite conduite (125) montée reposant sur l'élément de support (3) selon un appui radial.

2. Utilisation selon la revendication 1, dans laquelle l'élément de support (3) est conçu pour offrir un appui dans toutes les directions radiale à la conduite (125).

3. Utilisation selon la revendication 2, dans laquelle l'élément de support (3), avec un jeu (81) d'au moins 1 mm et d'au plus 50 mm, prédéfinit une position radiale (80) pour la conduite (125).

4. Utilisation selon l'une des revendications 1 à 3, dans laquelle une surface d'appui (70a), formée par l'élément de support (3) permettant un repos selon un appui radial de la conduite (125), présente une étendue axiale d'au moins 1 cm et d'au plus 20 cm.

5. Utilisation selon l'une des revendications 1 à 4, dans laquelle l'élément de support (3) est agencé à l'intérieur de la manchette en élastomère (1), c'est-à-dire en étant encadré radialement sur l'extérieur par ladite manchette en élastomère (1).

6. Utilisation selon la revendication 5, dans laquelle l'élément de support (3) est introduit dans la manchette en élastomère (1) et une contre-dépouille (50) retient l'élément de support (3) en place dans au moins une direction axiale (25, 45).

7. Utilisation selon la revendication 5 ou 6, dans laquelle l'élément de support (3) et le collier de serrage (2) sont agencés axialement à la même hauteur, le collier de serrage (2) étant agencé radialement à l'extérieur de l'élément de support (3).

8. Utilisation selon la revendication 7, dans laquelle une contre-dépouille retient en place le collier de serrage (2) de façon radialement extérieure sur l'élément de support (3) dans au moins une direction axiale (25, 45).

9. Utilisation selon l'une des revendications précédentes, dans laquelle la manchette en élastomère (1) forme une poche circonférentielle (40), et est en effet dotée d'un évidement (41) ménagé dans la manchette en élastomère (1) selon une première direction axiale (25) et dans lequel est agencé le collier de serrage (2).

10. Utilisation selon la revendication 9, dans laquelle la poche (40) présente un pourtour totalement fermé, selon la première direction axiale (25), et le collier de serrage (2) est actionné depuis un côté situé dans une deuxième direction axiale (45) opposée à celle-ci afin de pouvoir être élargi et ainsi presser la manchette en élastomère (1).

11. Utilisation selon l'une des revendications précédentes, dans laquelle un élément tubulaire (20) forme l'ouverture (22) et l'intrados (112) consiste ainsi en une face de paroi intérieure (20.1) dudit élément tubulaire (20), un relief (23) étant prévu sur la face de paroi intérieure (20.1) et formant une contre-dépouille (50) avec un relief (23) présent sur une face de paroi extérieure de la manchette en élastomère (1) introduite dans l'ouverture (22).

12. Utilisation selon l'une des revendications précédentes, dans laquelle la manchette en élastomère (1) présente, pour assurer l'étanchement contre la conduite (125), un manchon (1.1-1.3) en saillie axiale dans lequel sont agencées des coquilles (60.1) de préférence amovibles permettant une adaptation à divers diamètres de conduite, ladite manchette en élastomère (1) étant disposée de façon étanche contre la conduite (125) du fait que le manchon est pressé en direction de la conduite (125) grâce à un moyen de serrage (126) agencé sur ledit manchon (1.1-1.3).

13. Utilisation selon l'une des revendications précédentes, dans laquelle le collier de serrage (2) présente une section de serrage (90), laquelle section de serrage (90) présente un élément en forme de coin (92.1, 92.2), une pièce de guidage (100.1.1, 100.1.2, 100.2.1, 100.2.2) et une vis de serrage (30), étant entendu que, aux fins de l'élargissement selon l'opération ii), la vis de serrage (30) subit un serrage, ce qui modifie l'étendue de la section de serrage (90), l'élément en forme de coin (92.1, 92.2) étant alors guidé sur la pièce de guidage (100.1.1, 100.1.2, 100.2.1, 100.2.2) et se déplaçant au cours du guidage, sous l'effet du serrage de la vis de serrage (30), en suivant une trajectoire sur la pièce de guidage (100.1.1, 100.1.2, 100.2.1, 100.2.2), laquelle trajectoire présente une portion orientée dans une direction d'élargissement (91) définissant l'étendue de la section de serrage (90).

14. Agencement de conduite comportant une conduite (125), une ouverture (22), une manchette en élastomère (1) et un collier de serrage (2), ladite conduite (125) étant montée de manière à mener à l'ouverture (22) ou à la traverser grâce à la manchette en élastomère (1) et au collier de serrage (2), notamment en conséquence d'une utilisation selon l'une des revendications précédentes,
ladite manchette en élastomère (1) étant enchâssée dans l'ouverture (22), le collier de serrage (2) pressant radialement vers l'extérieur la manchette en élastomère (1) contre un intrados (112) délimitant ladite ouverture (22), eu égard à un axe médian (4) de l'ouverture (22), et
la manchette en élastomère (1) étant disposée de façon étanche contre la conduite (125) qui mène à l'ouverture (22) ou traverse ladite ouverture (22), **caractérisé en ce que** la conduite (125) est montée, de manière à mener à l'ouverture (22) ou à la traverser, au moyen d'un élément de support (3) réalisé dans un matériau plus rigide que celui de la manchette en élastomère (1), ladite conduite (125) montée reposant sur l'élément de support (3) selon un appui radial.
